(19) Europäisches Patentamt / European Patent Office / Office européen des brevets

(11) **EP 4 058 758 B1**

(12) **FASCICULE DE BREVET EUROPEEN**

(45) Date de publication et mention
de la délivrance du brevet:
**06.11.2024 Bulletin 2024/45**

(21) Numéro de dépôt: **20823894.9**

(22) Date de dépôt: **13.11.2020**

(51) Classification Internationale des Brevets (IPC):
**G01D 21/00** *(2006.01)*  **G01D 5/245** *(2006.01)*
**F01D 17/02** *(2006.01)*  **F01D 17/06** *(2006.01)*
**F01D 21/00** *(2006.01)*  **F01D 21/04** *(2006.01)*
**G01M 5/00** *(2006.01)*  **G01M 15/14** *(2006.01)*
**F01D 5/28** *(2006.01)*

(52) Classification Coopérative des Brevets (CPC):
**G01M 5/0033; F01D 17/02; F01D 17/06;**
**F01D 21/003; F01D 21/04; G01D 5/2452;**
**G01M 5/0016; G01M 15/14;** F01D 5/282;
G01D 21/00

(86) Numéro de dépôt international:
**PCT/FR2020/052085**

(87) Numéro de publication internationale:
**WO 2021/094700 (20.05.2021 Gazette 2021/20)**

(54) **ENSEMBLE MODULAIRE ET AUTONOME DE DETECTION DE LA POSITION ANGULAIRE DES AUBES D'UNE ROUE A AUBES ET ENSEMBLE MODULAIRE ET AUTONOME DE DETECTION D'ENDOMMAGEMENT DES AUBES D'UNE ROUE A AUBES D'UNE TURBOMACHINE**

MODULARE UND AUTONOME ANORDNUNG ZUR ERFASSUNG DER WINKELPOSITION DER SCHAUFELN EINES LAUFRADES UND MODULARE UND AUTONOME ANORDNUNG ZUM ERKENNEN VON SCHÄDEN AN DEN SCHAUFELN EINES LAUFRADES EINES TURBINENMOTORS

MODULAR AND AUTONOMOUS ASSEMBLY FOR DETECTING THE ANGULAR POSITION OF THE BLADES OF AN IMPELLER AND MODULAR AND AUTONOMOUS ASSEMBLY FOR DETECTING DAMAGE TO THE BLADES OF AN IMPELLER OF A TURBINE ENGINE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **14.11.2019 FR 1912726**

(43) Date de publication de la demande:
**21.09.2022 Bulletin 2022/38**

(73) Titulaire: **SAFRAN AIRCRAFT ENGINES
75015 Paris (FR)**

(72) Inventeur: **GARNIER, Alméric Pierre Louis
77550 MOISSY-CRAMAYEL (FR)**

(74) Mandataire: **Cabinet Beau de Loménie
158, rue de l'Université
75340 Paris Cedex 07 (FR)**

(56) Documents cités:
**FR-A1- 3 030 625      US-A1- 2017 211 411
US-A1- 2018 224 353**

**Description**

**Domaine Technique**

L'invention concerne le domaine de la surveillance d'un moteur d'aéronef et plus particulièrement, l'identification des aubes d'un aubage de manière individuelle, notamment pour la détection d'un éventuel endommagement ou de balourd sur une ou plusieurs aubes mobiles sur une roue à aubes d'un moteur d'aéronef.

**Technique antérieure**

Les soufflantes des nouvelles générations de moteur d'aéronef sont équipées d'aubes composites. L'intégration de ces aubes dans une soufflante permet une amélioration sensible des performances de celle-ci et un gain en masse non-négligeable.

Cependant, la surveillance de l'état de santé d'aubes composites s'avère complexe à mettre en oeuvre.

Tandis que pour des aubes métalliques une simple inspection à l'oeil nu permet de détecter directement un éventuel endommagement de celles-ci, un tel type de détection s'avère limitée pour des aubes composites. Par exemple, un choc sur une aube composite peut entraîner un délaminage et des dommages internes non-observables à l'oeil nu et donc plus difficiles à détecter.

Les aubes composites étant des produits à forte valeur ajoutée, il est fortement souhaitable de pouvoir planifier en amont une maintenance conditionnelle de celles-ci afin de réduire les délais et coûts de la maintenance au sol de l'aéronef. La planification de cette maintenance requiert donc une détection et une identification performantes de tout dommage éventuel d'une aube.

Une méthode de détection d'endommagement d'aube connue consiste en l'utilisation de capteurs tip-timing. Ces capteurs détectent et comptent le passage des aubes par rapport à une base de temps. Les mesures des capteurs tip-timing sont ensuite utilisées pour calculer la fréquence propre de chaque aube, la fréquence propre donnant une information sur l'état de santé de l'aube.

Cette méthode nécessite en pratique un nombre important de capteurs tip-timing pour effectuer les mesures, ainsi que d'importantes ressources en calcul afin de déterminer les fréquences propres de chaque aube. Cette solution est donc applicable uniquement sur banc d'essai, où les contraintes d'intégration (ex : encombrement, masse, ressources de calcul disponibles) sont moindres. Une telle solution n'est cependant pas transposable pour un système embarqué dans un aéronef compte tenu des contraintes d'intégration et des ressources logicielles requises. Un suivi vol à vol de l'état de santé des aubes n'est donc pas possible sans immobilisation au sol du moteur de l'aéronef.

Une autre solution connue de détection d'endommagement consiste à surveiller la fréquence propre de chaque aube à l'aide d'un « Ping-test ». Au cours de ce test, chaque aube est excitée à l'aide d'une impulsion de type choc, une mesure de la réponse impulsionnelle en fréquence de chacune d'elle permettant de déduire un éventuel endommagement. Néanmoins, une fois encore, un tel procédé nécessite une immobilisation du moteur de l'aéronef afin d'être mis en oeuvre.

Il existe un besoin pour une solution embarquée dans un aéronef permettant de contrôler l'état de santé de chacune de ses aubes et d'assurer un suivi de leur état de santé vol à vol. De manière générale, ce besoin concerne tout type d'aubes, ces dernières pouvant aussi bien être en matériau composite qu'en tout autre matériau, par exemple en métal.

L'identification des aubes d'un aubage de manière individuelle est primordiale aussi bien pour l'équilibrage des aubages que pour les fonctions de surveillance de l'état de santé des aubages. Cette identification peut se faire par la détection de l'information dite du « Top-Tour ».

Le Top-Tour est un point de référence fixe, comme par exemple un carter moteur, vis-à-vis d'un élément en rotation, comme par exemple un arbre basse pression ou un arbre haute pression.

Cette position permet de connaitre la position angulaire de l'arbre basse pression vis-à-vis du carter (dans le repère fixe).

Les rotors de moteur d'aéronef nécessitent en effet d'être équilibrés afin d'assurer le bon respect de limites vibratoires sur le moteur. Pour ce faire, il est nécessaire de compenser le balourd, ou déséquilibre, mesuré, en positionnant une ou plusieurs masses à des positions angulaires précises dans le repère fixe. Le top-tour permet alors de définir les positions d'accroche de ces masses. L'identification faite par un homme doit être concordante avec celle faite par la machine (système embarqué) qui est en support.

Usuellement, une méthode de détection du top-tour consiste en l'utilisation d'un capteur, dit de top-tour, qui détecte le passage de dentures, ou aubes, à son regard et particulièrement le passage d'une dent singulière de l'aubage (ici la roue dentée) à son regard. Cette roue dentée, appelée roue phonique, est caractérisée en ce qu'elle présente une singularité, qui peut être la présence d'un excédent ou d'un manque localisée de matière sur la roue. Cette anomalie est détectée par un moyen tel qu'un capteur capacitif ou un capteur à effet hall par exemple. La détection de cette anomalie permet de connaitre la position angulaire de référence pour l'ensemble de la roue.

La roue phonique n'a pas de fonction autre que celle de fournir cette référence angulaire et servir de point de mesure de la vitesse de rotation des parties tournantes à laquelle elle se rattache.

La roue phonique ne voit pas de flux. Elle n'a pas de fonction dite aérodynamique et ne participe donc pas à la propulsion du moteur.

Cependant, cette roue phonique a un impact à la fois sur la masse de l'aéronef, et ce d'autant plus lorsqu'elle est en rotation, et sur l'intégration étant donné qu'on ajoute cette pièce spécifique sur l'arbre basse pression du moteur et qu'il est nécessaire d'intégrer le capteur jusqu'à la roue phonique, notamment avec des difficultés liées aux tolérances de mise en oeuvre.

Il peut donc être avantageux de ne pas intégrer de roue phonique et d'obtenir l'information du top-tour avec un autre procédé.

Il est connu du document US 2012/148400 une détection du top-tour à partir d'une détection d'une singularité sur une aube d'un aubage autre que sur la roue phonique afin de pouvoir s'en abstraire.

Il est également connu du document EP 2 661 611 un système de remplacement de la mesure de vitesse fait via la roue phonique. Lorsque l'arbre est sectionné, la roue phonique située en amont de la rupture ne peut plus traduire la vitesse de rotation de la turbine. Cette information est primordiale pour la régulation de sorte que la turbine n'entre pas en survitesse.

Dans ce procédé, pour obtenir l'information, une aube doit avoir un profil différent afin de pouvoir générer un profil de pression différent.

Il est en outre connu du document US 8 528 317, une méthode de surveillance de FOD sur un turbo fan utilisant l'information de top-tour : « beep per turn », de la roue phonique.

Il est également connu une méthode d'identification d'un top-tour via la différence de répartition des dents d'une roue phonique. En effet, la différence de proximité va avoir une influence sur le temps de passage détecté par le capteur de top tour. Par traitement algorithmique, cette singularité dans les deltas de temps permet d'identifier la singularité de la répartition de l'aubage et donc d'identifier une référence angulaire.

L'ensemble des solutions connues et mentionnées ci-dessus proposent de réaliser le top tour en réalisant une singularité sur un aubage ou une roue phonique.

L'introduction d'une aube singulière dans la turbomachine, ce qui présente différents inconvénients comme la nécessité de développer une pièce spécifique, ainsi que de prévoir une gestion de production d'aubes différentes, entraîne un comportement différent de celle-ci par rapport aux autres aubes de la turbomachine. Des problématiques de certification de la turbomachine, de gestion des stocks et une complexification de la maintenance de la turbomachine, ainsi que des perturbations aérodynamiques et vibratoires de par la singularité de l'aube singulière, et donc une dégradation des performances, existent alors.

Les procédés connus décrits ci-dessus ont également pour inconvénient de générer un positionnement d'une aube de façon non équi-réparties, c'est-à-dire angulairement non régulière par rapport aux autres aubes. Il est possible d'avoir une répartition non équi-répartie des aubes sur un aubage, mais cela entraînerait également des contraintes de fabrication et des perturbations aérodynamiques ayant un impact négatifs sur les performances du moteur.

Les procédés connus décrits ci-dessus ont également pour inconvénient que les capteurs doivent avoir une bande passante adéquate à la détection du passage de toutes les aubes, pour l'ensemble des plages de régime adoptées. En effet, si le régime est trop grand ou bien si le nombre d'aubes est trop important, un capteur capacitif ne pourra plus distinguer les aubes, et il faudra utiliser un capteur optique par exemple.

Enfin, les procédés et systèmes connus décrits ci-dessus ont également pour inconvénient le fait de nécessiter une remonté d'information relative au top-tour via le calculateur où peuvent se réaliser les traitements. Ceci soulève une problématique d'indépendance de la surveillance proposée par rapport à un système de type FADEC (Full Authority Digital Engine Control), et plus particulièrement par rapport au dispositif de régulation numérique du moteur ECU (Engine Control Unit) ou au dispositif de suivi de l'état de santé moteur EMU (Engine Motor Unit), ainsi que d'autres problématiques d'intégration, et donc d'impact masse, puisque les solutions proposées sont toutes des solutions destinées à être intégrées de manière définitive sur une turbomachine.

Enfin, US2018/224353 divulgue un système de surveillance de l'intégrité des aubes d'une turbomachine à l'aide de capteurs, qui peut être amovible, modulaire et autonome; les données de mesures vibratoires peuvent servir à la détection d'une position angulaire; dans ce document, les deux capteurs montés sur la turbomachine sont associés à la même roue à aubes de la turbomachine.

**Exposé de l'invention**

La présente invention a pour but de remédier aux inconvénients précités en offrant une solution amovible indépendante des calculateurs de la turbomachine et de l'alimentation de la turbomachine et permettant de générer une référence angulaire de type top tour, et de stocker les signaux générés.

A cet effet, la présente invention propose un ensemble, défini dans la revendication 1, modulaire et autonome de détection de la position angulaire des aubes d'une roue à aubes, l'ensemble étant destiné à être monté sur une turbomachine.

Selon une caractéristique générale de l'invention, l'ensemble comprend au moins une source d'alimentation électrique permettant le fonctionnement des éléments de l'ensemble de détection indépendamment de la turbomachine sur laquelle il est destiné à être embarqué, au moins un premier capteur destiné à être associé à la première roue à aubes, au moins un second capteur destiné à être associé à la seconde roue à aubes, et un boîtier principal comportant une unité de traitement principale et des moyens de mémorisation.

L'invention permet ainsi de fournir une solution sous la forme d'un kit indépendant de toute turbomachine avec un boîtier principal et différents capteurs. L'ensemble selon l'invention peut ainsi être fixé mécaniquement sur une turbomachine pour réaliser sa mission de détection de position angulaire tout en restant indépendant de la turbomachine aussi bien en termes d'alimentation électrique grâce à la source d'alimentation que de capacité de traitement de l'information grâce à l'unité de traitement principale, autrement dit en restant indépendant des calculateurs de la turbomachine. Et cela sans avoir d'impact sur le fonctionnement de la turbomachine.

L'autonomie de l'ensemble modulaire de mesure fournie par la source d'alimentation électrique permet d'installer ponctuellement l'ensemble modulaire sur une turbomachine, et ainsi de réduire l'impact massique dans le temps.

Selon un premier aspect de l'ensemble autonome et modulaire de détection, le boîtier principal, ledit au moins un premier capteur et ledit au moins un second capteur peuvent comprendre chacun des moyens de fixation manuelle réversible permettant de les monter sur la turbomachine de manière amovible.

Par moyens de fixation manuelle, on entend des moyens permettant une fixation sur la turbomachine sans recourir à un quelconque outil. Chacun des éléments de l'ensemble peut ainsi être monté et démonté facilement sans aucun outil sur la turbomachine.

Un tel ensemble de détection présente une masse inférieure au kilogramme. La modularité de l'ensemble fournie par son caractère amovible permet de n'avoir un impact massique sur la turbomachine que ponctuel et ainsi de limiter l'impact en masse sur une turbomachine sur le long terme, et par extension sur un aéronef, lié à l'embarquement sur la turbomachine d'un tel ensemble. En effet, la surveillance de l'aubage d'une turbomachine n'est pas forcément à réaliser en continu. Les dégradations de l'état de santé de l'aubage à identifier étant définitives, un contrôle ponctuel, à l'issu d'un vol ou bien pendant un vol, tous les trois vols par exemple ou à la suite d'un évènement (par exemple une ingestion de corps étranger), est suffisant. L'ensemble apporte tout le dispositif nécessaire à la surveillance le temps du contrôle, avant d'être retiré de la turbomachine.

En outre, la modularité de l'ensemble embarqué en tant que kit Plug & Play lui permet d'être monté de manière ponctuelle sur au moins une turbomachine et ainsi d'éviter d'avoir deux systèmes embarqués sur un même aéronef.

La modularité de l'ensemble permet également de choisir de n'utiliser l'ensemble qu'au sol, ce qui évite d'avoir besoin d'une certification de l'ensemble, la certification de l'ensemble étant nécessaire pour tout dispositif embarqué en vol.

Les moyens de mémorisation permettent de stocker les données recueillies par les capteurs en vue de de leur traitement en vol par l'unité de traitement du boîtier principal. Les moyens de mémorisation permettent également d'emporter les informations nécessaires et adaptés pour avoir la base de référence adaptée à chaque étage d'aubage surveillé et ainsi permettre de réaliser une détection en vol. Avec quatre capteurs et un boitier principal, on peut par exemple surveiller quatre étages d'un même arbre rotatif ou deux aubages de deux arbres différents.

Selon un deuxième aspect de l'ensemble autonome et modulaire de détection, chaque premier et second capteurs peut comprendre un module de détection, un module de traitement local, et des moyens de communications configurés pour délivrer les mesures du capteur correspondant à l'unité de traitement principale. Les capteurs peuvent avoir différentes configurations pour être adaptés à différents environnements d'une turbomachine. La différence de température entre un emplacement arrière du corps de la turbine et celle en position compresseur est de l'ordre de 200 à 250°C. Certains capteurs peuvent ainsi être configurés pour résister aux températures les plus élevées attendues.

Selon un mode de réalisation préférentiel du deuxième aspect, chaque premier et second capteurs comprennent en outre une source d'alimentation du capteur, et les moyens de communications sont des moyens de communications sans fil. L'utilisation de moyens de communication sans fil et d'une source d'alimentation pour chaque capteur et pour le boîtier principal permet de faciliter l'installation des différents éléments de l'ensemble puisqu'elle évite de devoir raccorder les capteurs au boîtier principal et donc de passer des câbles entre les différents éléments. Selon l'invention, l'ensemble autonome et modulaire de détection dans lequel l'ensemble est destiné à être monté sur une turbomachine comporte une première roues à aubes comprenant un premier nombre d'aubes et une seconde roue à aubes comprenant un second nombre, les deux roues à aubes étant traversées chacune par un flux d'air et couplées directement ou indirectement l'une à l'autre, et le premier nombre d'aubes de la première roue et le second nombre d'aubes de la seconde roue étant distincts et premiers entre eux, lesdits capteurs étant chacun configurés pour générer un signal à chaque passage d'une aube d'une roue à aubes devant le capteur, et l'unité de traitement principale étant configurée pour déterminer l'intervalle de temps séparant la détection d'une aube de la première roue avec la détection de chacune des aubes de la seconde roue.

Cette configuration permet ainsi de détecter la position angulaire des aubes d'une roue à aubes d'une turbomachine en l'absence d'une roue phonique, ce qui permet un gain en masse tournante et en encombrement, ou en l'absence d'une singularité sur une aube de la roue, ce qui permet d'éviter d'introduire une perturbation aérodynamique dans le flux de la turbomachine. Cette détection est réalisée en utilisant les informations temporelles de deux aubages qui n'ont pas le même nombre d'aubes.

En outre, cette détection peut être réalisée aussi bien lorsque l'aéronef est au sol que lorsqu'il est en vol.

Cette configuration utilise de manière avantageuse les aubages déjà présents sur l'arbre de la turbomachine et dédiés à la propulsion. La comparaison du signal temporel entre les deux aubages permet ainsi d'obtenir une référence angulaire de type Top-Tour. En effet, il est ainsi possible de former une référence angulaire à partir du calage des aubes des deux roues mobiles relativement entre elles.

Plus particulièrement, la comparaison du temps de passage des aubes de la première roue à aubes avec le temps de passage des aubes de la seconde roue à aubes consécutivement permet de repérer un motif, c'est-à-dire une signature. Cette signature permet d'identifier chaque aube en particulier et de la définir comme étant le Top-Tour.

Dans le cas où la première et la deuxième roues sont entraînées par un même arbre, l'entraînement est direct. Dans le cas où la première et la deuxième roues sont entraînées respectivement par un premier arbre et un second arbre, le premier arbre et le second arbre étant raccordés mécaniquement par le biais d'un dispositif de réduction, les deux roues sont entraînées de manière indirecte par le même arbre.

En outre, l'ensemble peut comprendre un module de détermination destiné à déterminer la vitesse de rotation de l'arbre ou des arbres entraînant les deux roues à aubes, la détermination de la position angulaire relative tenant compte de la ou des vitesse(s) de rotation déterminée(s).

La signature varie en fonction du régime de l'arbre. Les écarts étant liés à la répartition des aubes, ils sont normalisables par la vitesse de rotation à nombre d'aubes connu. Aussi la logique de détection du Top-Tour n'est pas dépendante de la vitesse de rotation de l'arbre en ce sens.

Selon un mode de réalisation préférentiel de l'invention, l'ensemble peut comprendre un premier capteur et un deuxième capteur destinés à être montés sur la première roue à aubes de la turbomachine et un troisième et un quatrième capteurs destinés à être montés sur la seconde roue à aubes de la turbomachine, le premier et le deuxième capteurs étant de deux types différents, et le troisième et le quatrième capteurs étant de deux types différents, le type de capteur étant choisi notamment parmi les types optique, magnétique et capacitif.

Le couple de paramètres comprenant le nombre d'aube des disques et le régime de l'arbre conditionne la technologie de capteurs à utiliser pour assurer la bonne résolution sur l'acquisition des temps de passage et le distinguo des aubes détectées.

Selon un troisième aspect de l'ensemble autonome et modulaire de détection, le boîtier principal peut comprendre en outre un module d'horloge sur lequel sont synchronisés lesdits au moins un premier et au moins un second capteurs.

La synchronisation des capteurs sur une même base temporelle permet d'améliorer la précision de mesure des intervalles de temps de détection de passage des aubes. Selon un quatrième aspect de l'ensemble autonome et modulaire de détection, lesdits au moins un premier et au moins un second capteurs peuvent posséder une bande passante fréquentielle correspondant aux régimes de rotation de l'arbre pour lesquels les aubes sont détectées.

Dans un autre aspect de l'invention, il est proposé un ensemble de détection d'endommagement d'une aube d'une roue à aubes d'une turbomachine, comprenant un ensemble modulaire et autonome de détection de la position angulaire des aubes d'une roue à aubes tel que défini ci-dessus, et des moyens d'alerte.

Dans un autre aspect de l'invention, il est proposé une turbomachine configurée pour recevoir un ensemble modulaire et autonome de détection de la position angulaire des aubes d'une roue à aubes tel que défini ci-dessus, comprenant un logement et une trappe d'accès audit logement pour chaque élément de l'ensemble parmi le boîtier principal, ledit au moins premier capteur et ledit au moins un second capteur.

Les zones de fixation des éléments de l'ensemble, ou logements, prévues sur la turbomachine garantissent ainsi un accès aisé, et permettent au Kit, c'est-à-dire à l'ensemble, d'être monté et démonté dans le même ordre de grandeur qu'une pièce LRU (Light Replaceable Unit), à savoir 20 min hors action sur l'habillage.

Selon un premier aspect de la turbomachine, cette dernière peut comprendre une première roues à aubes comportant un premier nombre d'aubes et une seconde roue à aubes comprenant un second nombre d'aubes, les deux roues à aubes étant traversées chacune par un flux d'air et couplées directement ou indirectement l'une à l'autre, et le premier nombre d'aubes de la première roue et le second nombre d'aubes de la seconde roue étant distincts et premiers entre eux.

Selon un second aspect de la turbomachine, le premier nombre d'aubes est de préférence au moins égal à deux et le second nombre d'aubes est au moins égal à trois.

Un autre objet de l'invention propose un aéronef comprenant au moins une turbomachine telle que définie ci-dessus.

**Brève description des dessins**

[Fig. 1] La figure 1 représente schématiquement un ensemble modulaire et autonome de détection de la position angulaire des aubes d'une roue à aubes selon un mode de réalisation de l'invention.

[Fig. 2] La figure 2 illustre schématiquement une turbomachine selon un mode de réalisation de l'invention sur laquelle est montée l'ensemble modulaire et autonome de détection de la position angulaire des aubes d'une roue à aubes de la figure 1.

[Fig. 3] La figure 3 illustre de manière schématique un ensemble de détection d'un endommagement pour des aubes mobiles d'une roue aubagée d'une turbomachine d'aéronef présentant une première configuration.

[Fig. 4] La figure 4 illustre de manière schématique un ensemble de détection d'un endommagement pour des aubes mobiles d'une roue aubagée d'une turbomachine d'aéronef présentant une seconde configuration.

[Fig. 5] La figure 5 présente un organigramme d'un procédé de détection de la position angulaire des aubes d'une roue à aubes d'une turbomachine.

[Fig. 6] La figure 6 présente un organigramme d'un procédé de détection d'un endommagement d'une ou plusieurs aubes mobiles constitutives d'une roue à aubes d'un moteur d'aéronef, le procédé comprenant une détection de la position angulaire des aubes d'une roue selon un mode de mise en oeuvre de l'invention.

**Description des modes de réalisation**

L'invention s'applique d'une manière générale dans le cadre de services de maintenance prédictive réalisés par un fabricant de moteurs d'aéronefs.

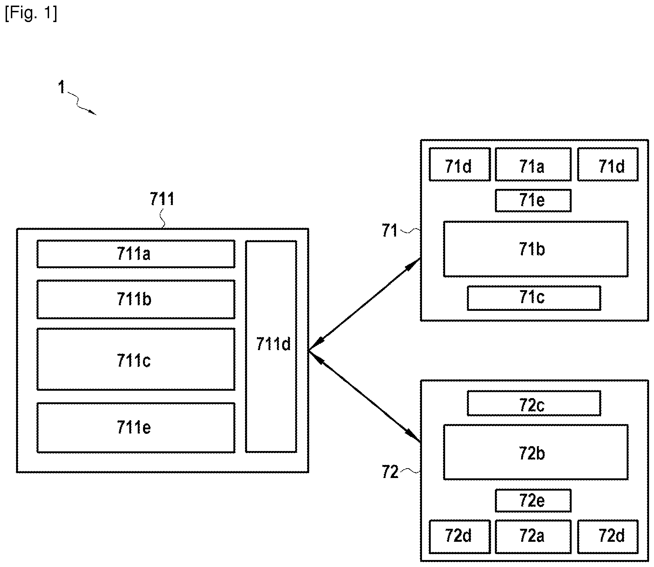

Sur la figure 1 est représenté schématiquement un ensemble 1 modulaire et autonome de détection de la position angulaire des aubes d'une roue à aubes selon un mode de réalisation de l'invention, l'ensemble 1 de détection étant destiné à être monté sur une turbomachine 10.

Dans le mode de réalisation illustré sur la figure 1, l'ensemble, ou kit, modulaire et autonome de détection 1 comprend un boîtier principal 711, un premier capteur 71 et un second capteur 72. Dans une variante, l'ensemble pourrait comprendre plus de deux capteurs.

Le boîtier principal 711 comprend une unité de communication 711a, une batterie principale d'alimentation 711b, une unité de mémorisation 711c, deux clips de fixation manuelle réversible 711d et une unité de traitement principale 711e.

Une partie de l'unité de mémorisation 711c est une mémoire vive de type RAM dédiée au calcul et une autre partie de l'unité de mémorisation 711c est une mémoire morte de type NVRAM pour le stockage des résultats et des paramètres de configuration de l'unité de traitement principale 711e telle qu'un processeur.

Les clips de fixation manuelle réversible permettent de fixer le boîtier principal 711 sur une turbomachine 10 sans utilisation d'outil et de manière facilement amovible. Les clips de fixation 711d sont des fixations physiques multipoint pour raccord mécanique à une turbomachine 10.

Chaque capteur 71 et 72 comprend un module de détection, respectivement noté 71a et 72a, tel qu'un capteur Tip-timing de type capacitif, optique, inductif, ou à pression par exemple, une batterie locale, notée respectivement 71b et 72b, un module de communication, noté respectivement 71c et 72c, permettant de communiquer avec l'unité de communication 711a du boîtier principal 71, deux clips de fixation manuelle réversible, notés respectivement 71d et 72d, et une unité de traitement locale, notée respectivement 71e et 72e, telle qu'un processeur.

Les clips de fixation manuelle réversible 71d ou 72d permettent de fixer le capteur 71 ou 72 sur une turbomachine 10 sans utiliser d'outil et de manière facilement amovible. Les clips de fixation 71d ou 72d sont des fixations physiques multipoint pour raccord mécanique à une turbomachine 10.

L'information captée par le module de détection 71a ou 72a du capteur 71 ou 72 est délivrée à l'unité de traitement locale 71e ou 72e qui prépare le signal avant son émission par le module de communication 71c ou 72c vers l'unité de communication 711a du boîtier principal 711. Le processeur local 71e ou 72e est capable de transformer les informations brutes acquises à plusieurs dizaines de kHz en provenance du module de détection 71a ou 72a en un signal transmissible (numérisation, compression, prétraitement, détection de passage d'aube).

Dans le mode de réalisation illustré sur la figure 1, le module de communication 71c ou 72c des capteurs 71 et 72 est adapté à la transmission et réception d'information sans fil, et l'unité de communication 711a du boîtier principal 711 est configurée et adaptée pour recevoir les informations transmises via un réseau de communication sans fil.

Dans une variante, l'ensemble de détection 1 peut comprendre une seule source d'alimentation, telle qu'une batterie, localisée dans le boîtier principal 711 et alimentant en énergie électrique les capteurs 71 et 72 via une liaison filaire.

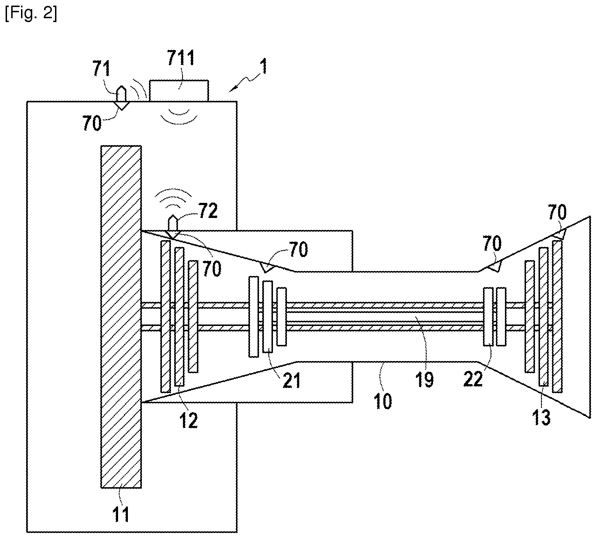

Sur la figure 2 est illustrée schématiquement une turbomachine 10 selon un mode de réalisation de l'invention sur laquelle est montée l'ensemble modulaire et autonome de détection de la position angulaire des aubes d'une roue à aubes de la figure 1.

Sur le mode de réalisation illustré sur la figure 2, un kit 1 de détection comprenant seulement un premier capteur 71 et un second capteur 72 est monté sur une turbomachine 10. Le premier capteur 71 est monté sur la nacelle de la turbomachine 10 en regard de la soufflante 11 pour lui permettre de réaliser une surveillance de la santé de l'aubage de la soufflante 11. Le second capteur 72 est monté sur la nacelle de la turbomachine 10 en regard de l'aubage 12 de l'étage du compresseur basse pression. Le boîtier principal 711 est quant à lui monté sur le carter de la soufflante de la turbomachine 10 sur une zone à basse température.

Le premier capteur 71 et le second capteur 72 sont installés sur la turbomachine dans des logements 70 prévus à cet effet et dotés d'une trappe d'accès depuis la nacelle permettant d'ouvrir et de fermer facilement l'accès aux logements pour monter ou démonter les capteurs 71 et 72.

Le boîtier principal 711 peut également être logé dans un emplacement prévu à cet effet avec une trappe d'accès dédiée. La trappe d'accès peut également être communalisée avec un logement dédié à la réception d'un autre élément de la turbomachine, comme une trappe d'accès à l'huile.

Dans le mode de réalisation illustré sur la figure 2, la turbomachine 10 comprend trois autres emplacements 70 prévus pour recevoir des capteurs similaires aux premier et second capteurs 71 et 72.

Le premier et le second des trois autres emplacements 70, qui sont libres sur la figure 2, sont localisés à l'arrière de la turbomachine 10, pour l'un, en regard l'étage 13 de la turbine basse pression et, pour l'autre, en regard de l'étage 22 de la turbine haute pression. Le troisième des trois autres emplacements 70 libres est localisé sur la nacelle de la turbomachine 10 en regard de l'étage 21 du compresseur haute pression.

Grâce à ces emplacements 70, il serait possible, dans une autre configuration d'avoir deux autres capteurs positionnés pour surveiller l'étage 21 du compresseur haute pression et l'étage 22 de la turbine haute pression qui sont couplés par l'arbre de transmission 19.

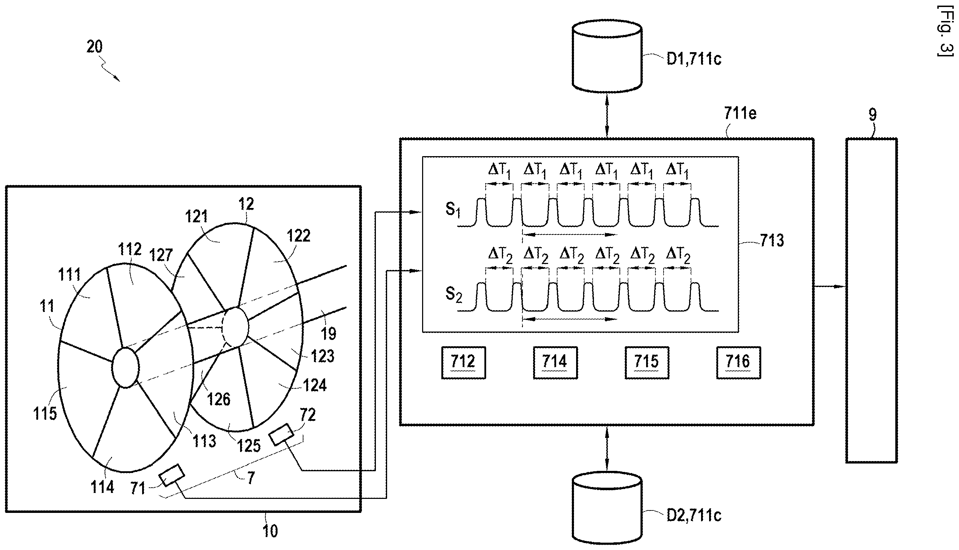

Sur la figure 3 illustre de manière schématique un ensemble 20 de détection d'un endommagement pour des aubes mobiles d'une roue aubagée 11, ou roue à aubes, d'une turbomachine 10 d'aéronef présentant une première configuration.

L'ensemble 20 de détection d'un endommagement comprend le kit 1 de détection de la position des aubes d'une roue à aubes de la figure 1 et des moyens d'alertes 9.

Pour améliorer la lisibilité de la figure 3, tous les éléments du kit 1 n'ont pas été représentés. Le kit 1 comprend bien tous les éléments décrits sur la figure 1, à savoir, un boîtier principal 711 comportant notamment l'unité de traitement principale 711e et une unité de mémorisation 711c sous la forme d'une ou plusieurs bases de données D1, D2, un premier capteur 71 et un second capteur 72.

En plus d'être utilisé pour la détection du Top-Tour, le premier capteur 71 et le second capteur 72 de l'ensemble 1 de détection de la position des aubes forment également des moyens d'acquisition 7 de données de l'ensemble 20 de détection d'endommagement.

Lorsque le kit 1 de détection de la position des aubes est intégré dans un ensemble 20 de détection d'un endommagement, l'unité de traitement principale 711e comprend des moyens supplémentaires pour réaliser la détection d'un endommagement. L'unité de traitement principale est configurée ainsi pour exécuter un programme d'ordinateur comprenant des instructions de code conçues pour mettre en oeuvre un algorithme d'acquisition, de traitement de signal, d'analyse, et d'alerte selon le procédé de détection d'endommagement de l'invention.

Les moyens d'acquisition 7 sont configurés pour acquérir un signal temporel $S_1$ relatif à des aubes 111 à 115 mobiles d'une roue aubagée 11, par exemple la roue aubagée de la soufflante (Fan) ou de toute autre roue aubagée du moteur 10.

Avantageusement, les moyens d'acquisition 7 utilisent une technique de « tip-timing » pour mesurer les temps/instants de passage TOA (« Time Of Arrival ») des aubes 111 à 115 mobiles.

Comme indiqué sur la figure 2, le premier capteur 71 des moyens d'acquisition 7, qui est un capteur tip-timing, est installé sur le carter du moteur 10 au droit de la roue aubagée 11 de la soufflante de sorte à acquérir un signal temporel $S_1$ propre au premier capteur 71.

Plus particulièrement, un capteur tip-timing 71 détecte et compte les passages des sommets des aubes 111 à 115 par rapport à une base de temps. Ainsi, un capteur tip-timing 71 peut mesurer le temps de passage courant entre les aubes 111 à 115 par rapport à un point de référence, aussi appelé « top-tour ». Pour un capteur tip-timing 71, les temps de passage (TOA) propres à chaque aube 111 à 115 peuvent ensuite être déduits des données mesurées par l'unité de traitement principale 711e, ici via un module de calcul 713 interne à l'unité de traitement principale 711e.

En d'autres termes, un capteur tip-timing 71 permet d'acquérir des mesures relatives aux temps/instants de passage du sommet de chaque aube 111 à 115 mobile au droit d'une zone de référence de la roue aubagée 11. Par ailleurs, dans le cas où plusieurs capteurs 71 sont utilisés sur une même roue à aubes, il est possible, afin de limiter les risques de pertes des capteurs tip-timing 71, de positionner les capteurs 71 de manière à maximiser leur distance azimutale, afin de les éloigner au maximum les uns des autres. Ainsi, en cas de défaillance locale d'un capteur 71 (ex : impact d'un débris sur une aube 111, encrassement d'un capteur 71) on minimise le risque que l'ensemble des capteurs 71 soient affectés.

En fonctionnement normal, les aubes 111 à 115 vont passer devant un même capteur tip-timing 71 de manière régulière. A un régime donné, on mesurera donc, pour un capteur 71, un intervalle de temps $\Delta t$ entre le passage de deux aubes consécutives.

A l'inverse, l'altération de l'état d'une aube, due par exemple à une usure ou à l'ingestion d'un corps étranger FOD (« Foreign Object Damage »), peut se traduire par une modification de la position de l'aube au moment où celle-ci passe devant au moins un des capteurs 71.

Afin de pouvoir identifier chaque aube 111 à 115, indépendamment de leur état, l'unité de traitement principale 711e est configurée pour analyser les différents signaux temporels $S_1$ par rapport à une référence angulaire.

La référence angulaire est fournie, dans ce mode de réalisation par le kit 1 de détection d'un « top-tour » de la figure 1, ce qui permet notamment d'éviter d'utiliser une roue phonique.

L'ensemble 1 de détection d'un « top-tour » est configuré pour détecter la position angulaire relative des aubes d'une première roue à aubes, telle que la roue à aubes 11 de la soufflante dont l'endommagement des aubes est surveillé à l'aide du premier capteur 71, et d'une seconde roue à aubes 12, la première et la seconde roues à aubes 11 et 12 étant traversées par un même flux d'air et, dans le mode de réalisation illustré sur la figure 3, entraînées par un même arbre 19 de la turbomachine 10.

L'endommagement des aubes de la seconde roue à aubes 12 peut être surveillé également de la même manière que pour la première roue à aubes 11 à l'aide d'autres capteurs tip-timing montés en regard de la seconde roue 12, tels que le second capteur 72.

La première roue 11 comprend un premier nombre d'aubes $N_1$ et la seconde roue 12 comprend un second nombre d'aubes $N_2$, le premier nombre d'aubes $N_1$ de la première roue à aubes 11 et le second nombre d'aubes $N_2$ de la seconde roue à aubes 12 étant distincts et ne présentant aucun diviseur commun. Le premier et le second nombre d'aubes $N_1$ et $N_2$ sont donc premiers entre eux. Les aubes sont réparties régulièrement sur chacune des roues à aubes 11 et 12. Ainsi, sur une même roue à aubes 11 ou 12 deux aubes adjacentes sont séparées d'un même intervalle angulaire.

Les premier et second capteurs 71 et 72 sont synchronisés temporellement sur une même horloge et sont configurés pour générer un signal à chaque passage d'une aube de la première ou seconde roue à aubes 11 ou 12 devant le capteur correspondant 71 ou 72.

L'unité de traitement principale 711e du kit de détection 1 est configurée pour déterminer l'intervalle de temps séparant la détection d'une aube de la première roue à aubes 11 avec la détection de chacune des aubes de la seconde roue à aubes 12.

Le premier capteur 71 embarqué renvoie un premier signal temporel $S_1$ à chaque fois qu'une aube de la première roue à aubes 11 passe devant. Le second capteur 72 embarqué renvoie un second signal temporel $S_2$ à chaque fois qu'une aube de la seconde roue à aubes 12 passe devant. L'intervalle de temps entre chaque détection, $\Delta T1$ pour la première roue à aubes 11 et $\Delta T2$ pour la seconde roue à aubes 12, dépend de la vitesse de rotation de l'arbre 19 et du nombre respectif d'aubes sur la roue à aubes 11 ou 12.

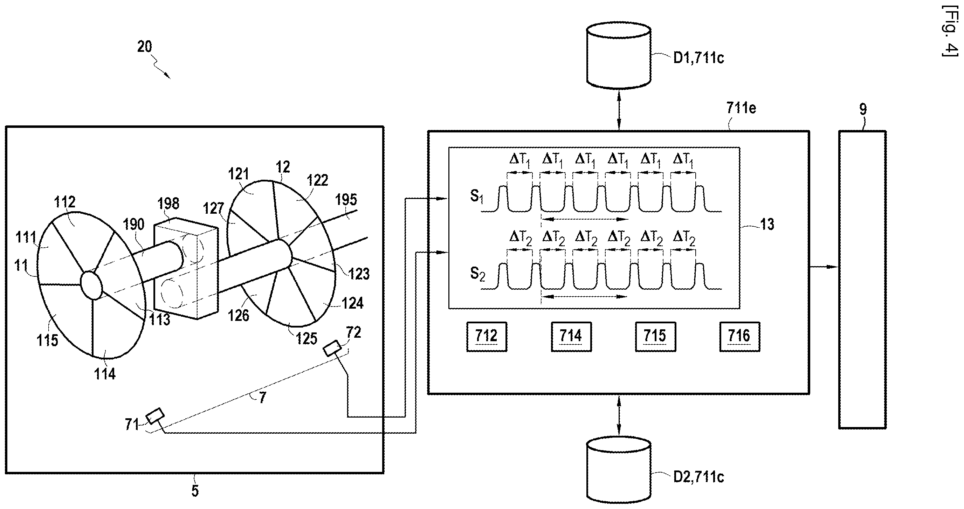

La figure 4 illustre de manière schématique un ensemble 20 de détection d'un endommagement pour des aubes mobiles d'une roue à aubes 11 d'une turbomachine 10 d'aéronef présentant une seconde configuration.

La seconde configuration de la turbomachine 10 illustrée sur la figure 4 diffère de la première configuration de la turbomachine 10 illustrée sur la figure 3 en ce que la première et seconde roues à aubes 11 et 12 sont traversées chacune par un flux d'air qui peut ne pas être le même et sont entraînées par deux arbres distincts 190 et 195 raccordés l'un à l'autre par un réducteur 198.

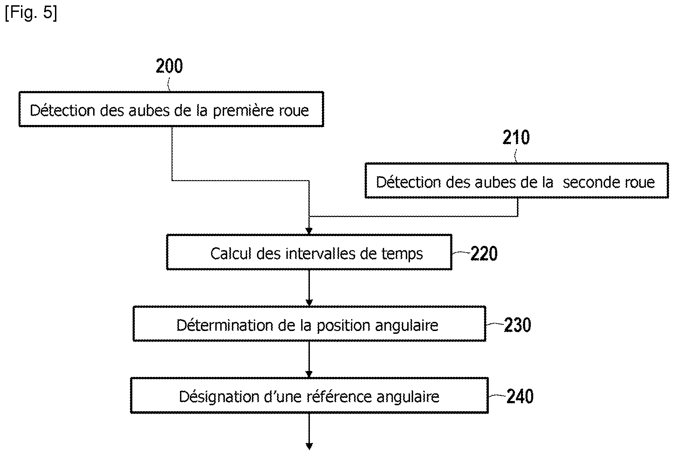

Sur la figure 5 est présenté un organigramme d'un procédé de détection de la position angulaire des aubes d'une roue à aubes d'une turbomachine selon un mode de mise en oeuvre de l'invention. L'ensemble 1 de détection d'un top-tour peut mettre en oeuvre ce procédé pour détecter le top-tour.

Le procédé comprend une première étape 200 dans laquelle le premier capteur 71 détecte le passage de chaque aube 111 à 115 de la première roue à aubes 11.

Dans le même temps, dans une seconde étape 210, le second capteur 72 détecte le passage de chaque aube 121 à 127 de la seconde roue 12.

Un disque fait $2\pi$ radians. Aussi en faisant le lien avec la vitesse de rotation de l'arbre, on a 1 tour / min = $2\pi/60$ rad.s$^{-1}$.

Pour une vitesse de rotation fixe, notée RPM ci-dessous, l'intervalle de temps séparant le passage de deux aubes successives d'une même roue à aubes possédant un nombre N d'aubes devant un capteur associé à la roue à aubes se détermine par l'équation suivante :

[Math. 1]

$$\Delta t = \frac{60}{2\pi * RPM} * \frac{1}{N}$$

Pour la première roue à aubes 11 et le premier capteur 71 dédié à son regard, on a donc :

[Math. 2]

$$\Delta t_1 = \frac{60}{2\pi * RPM} * \frac{1}{N_1}$$

Et pour la seconde roue à aubes 12 et le second capteur 72 dédié à son regard, on a donc :

[Math. 3]

$$\Delta t_2 = \frac{60}{2\pi * RPM} * \frac{1}{N_2}$$

Les premiers et seconds capteurs n'auront donc pas le même nombre de détections de passage d'aubes dans un même tour d'arbre.

Dans les modes de réalisation illustrés sur les figures 3 et 4, la première roue à aubes 11 comprend cinq aubes, soit $N_1=5$, référencées 111 à 115, et la seconde roue à aubes 12 comprend 7 aubes, soit $N_2=7$, référencées 121 à 127. Pour faciliter les calculs, on considère une vitesse de l'arbre égale à $60/2\pi$ tours par minute, soit RPM=$60/2\pi$ rpm.

Avec ces caractéristiques et en considérant que les capteurs ont la même position angulaire pour simplifier, on obtient le relevé des temps de passages des aubes suivants à l'issue de la première étape 200 et de la seconde étape 210 :

[Table 1]

| Premier capteur 71 | Second capteur 72 |
|---|---|
| 0.100 | 0.050 |
| 0.300 | 0.192 |
| 0.500 | 0.335 |
| 0.700 | 0.478 |
| 0.900 | 0.621 |
| 1.100 | 0.764 |
| 1.300 | 0.907 |

Il est important de noter que les aubes ne sont pas forcément initialement au regard du capteur, ce qui introduit un délai avant la première détection.

Dans une troisième étape 220, l'unité de traitement principale 711e calcule l'intervalle de temps $\Delta t$ séparant le passage d'une aube de la première aube 11 de chacune des aubes 121 à 127 de la seconde roue 12.

Si on compare, dans le premier mode de réalisation illustré sur la figure 3 où les deux roues à aubes 11 et 12 sont entraînée par un même arbre 19, le temps d'arrivée des aubes 111 à 115 de la première roue à aubes 11 avec le temps d'arrivée des aubes 121 à 127 de la seconde roue à aubes 12, on obtient cette matrice :

[Table 2]

| ΔT | 111 | 112 | 113 | 114 | 115 |
|---|---|---|---|---|---|
| 121 (tour 1) | 0.05 | 0.25 | 0.45 | 0.65 | 0.85 |
| 122 | -0.092 | 0.107 | 0.307 | 0.507 | 0.707 |
| 123 | -0.235 | -0.035 | 0.164 | 0.364 | 0.564 |
| 124 | -0.378 | -0.178 | 0.021 | 0.221 | 0.421 |
| 125 | -0.521 | -0.321 | -0.121 | 0.078 | 0.278 |
| 126 | -0.664 | -0.464 | -0.264 | -0.064 | 0.135 |
| 127 | -0.807 | -0.607 | -0.407 | -0.207 | -0.007 |
| 121 (tour 2) | 0.05 | 0.25 | 0.45 | 0.65 | 0.85 |

Les valeurs de la matrice correspondent à la différence entre le temps d'arrivée temps d'arrivée des aubes 111 à 115 de la première roue à aubes 11 avec le temps d'arrivée des aubes 121 à 127 de la seconde roue à aubes 12, c'est-à-dire aux intervalles de temps notés ΔT.

Dans une variante, le calcul de l'intervalle de temps ΔT peut prendre en compte le coefficient de réduction du, si présent, dispositif de réduction 198.

Par exemple, dans le second mode de réalisation illustré sur la figure 4, les deux roues à aubes 11 et 12 ne sont pas situées sur un même arbre mais entraînées par deux arbres distincts 190 et 195 couplées ensemble via un dispositif de réduction 198 de facteur $C_{réducteur}$. Pour la première roue à aubes 11 et le premier capteur 71 dédié à son regard, on a donc :

[Math. 4]

$$\Delta t_1 = \frac{60}{2\pi * C_{réducteur} * RPM} * \frac{1}{N_1}$$

Et pour la seconde roue à aubes 12 et le second capteur 72 dédié à son regard, on a donc :

[Math. 5]

$$\Delta t_2 = \frac{60}{2\pi * RPM} * \frac{1}{N_2}$$

Si on réalise une comparaison semblable dans le second mode de réalisation, mais cette fois-ci en calculant la différence entre un premier temps correspondant au produit entre le facteur $C_{réducteur}$ et le temps d'arrivée des aubes 111 à 115 de la première roue à aubes 11 et un second temps correspondant au temps d'arrivée des aubes 121 à 127 de la seconde roue à aubes 12, on obtient la même matrice qu'indiquée dans le tableau dénommé Table 2.

La table matricielle offre ainsi autant de références angulaires que souhaitées. Comme indiqué dans la table matricielle, les aubes d'une roue à l'autre ne sont pas nécessairement alignées non plus. Si deux roues à aubes sont alignées de manière à avoir une aube de chaque roue à aubes alignée alignées ensemble, on aurait une case du tableau pour laquelle la différence serait nulle.

Une telle base de données peut alors être exploitée par un algorithme.

Dans une variante, le calcul de l'intervalle de temps ΔT peut être normalisé par rapport à la vitesse de rotation de l'arbre 19 entraînant les deux roues à aubes 11 et 12 de sorte que le calcul soit indépendant de la vitesse de rotation.

Ensuite, dans une quatrième étape 230, l'unité de traitement principale 711e détermine la position angulaire relative de chaque aube 111 à 115 de la première aube 11 par rapport à la position angulaire des aubes 121 à 127 de la seconde roue 12 à partir des valeurs des intervalles ΔT et à la valeur du régime des premières et secondes roues à aubes 11 et 12.

Dans l'exemple illustré sur les figures 1 et 2 et les tableaux ci-dessus, ce sont les deux dernières aubes 115 et 127 à être détectées pour la fin d'un tour qui présentent l'écart temporel Δt le plus petit. Mais ce résultat reste aléatoire car il est lié à l'offset de décalage de la première détection. La différence d'offset entre les deux roues à aubes 11 et 12 sera liée quant à elle au montage des première et seconde roues à aubes 11 et 12 sur l'arbre 19, et à la position angulaire des premier et second capteurs 71 et 72. Cet offset relève donc de la production et de l'assemblage de la turbomachine 10.

Avec un alignement des premier et second capteurs 71 et 72 à la même référence angulaire, l'offset est uniquement lié à l'assemblage des roues à aubes 11 et 12 sur l'arbre 19 et à leur alignement relatif.

Cet offset est caractéristique de la turbomachine 10, et l'alignement résultant entre les aubes d'une roue à aubes à l'autre est inhérent à la turbomachine 10. Cet alignement, ici est présenté relativement au temps de passage des aubes au regard d'un capteur Tip Timing, qui est finalement la signature temporelle de cet alignement des aubes.

Enfin, dans une cinquième étape 240, l'unité de traitement principale 711e désigne comme référence angulaire, c'est-à-dire comme top-tour, l'aube de la première roue à aubes 11 présentant l'écart temporel $\Delta t$ le plus petit avec une aube de la seconde roue à aubes 12.

Comme mentionné ci-dessus, la cinquième aube 115 de la première roue à aubes 11 et la septième aube 127 de la seconde roue à aubes 12 sont les plus alignées.

Cette particularité d'alignement permet de décider de manière arbitraire, que la cinquième aube 115 de la première roue à aubes 11 sera considérée comme le Top Tour, c'est-à-dire comme la référence angulaire. Une autre aube de la première roue aubes 11 aurait pu être désignée arbitrairement comme le top-tour basé sur l'analyse du tableau matriciel ci-dessus.

L'alignement des aubes d'une roue à aubes à l'autre reste identique, car il est lié à l'assemblage, et au nombre d'aubes respectives des roues à aubes. L'identification du top-tour ne nécessite qu'un tour pour être identifié par l'algorithme déployé.

Ainsi, à chaque vol de l'aéronef comprenant une turbomachine 10, le premier tour du moteur 10 permet de reconstituer le Top-Tour. Ensuite chaque détection de l'aube choisie comme top-tour donnera la référence temporelle, au sens du tip-timing, et angulaire du top-tour.

Le système 20 de détection d'endommagement d'une aube cherche à détecter une dégradation durable des performances d'une ou plusieurs aubes 111 à 115 liée à un endommagement, et non pas une simple perturbation temporaire observable sur le signal S1. Ainsi, la référence angulaire (top tour T12) décrite ci-dessus est uniquement utilisée pour identifier chacune des aubes 111 à 115 par rapport aux autres. La détection de l'endommagement d'une aube, qui sera décrite par la suite, ne consiste donc pas ici en la simple observation ou détection de la variation de l'intervalle $\Delta t$ entre les impulsions mesurées entre les aubes 111 par chaque capteur tip-timing 71.

Au moins un capteur tip-timing 71 peut être utilisé pour mesurer le régime du moteur 10 de l'aéronef.

Chaque capteur tip-timing 71 peut être de type capacitif, inductif, à courants de Foucault, ou encore une sonde optique ces différents types de capteurs étant robustes, précis et peu encombrants.

Un exemple de mise en oeuvre d'un procédé de détection de l'endommagement d'une ou plusieurs aubes 111 mobiles constitutives de la roue aubagée mis en oeuvre par l'ensemble 20 de détection d'endommagement est maintenant décrit.

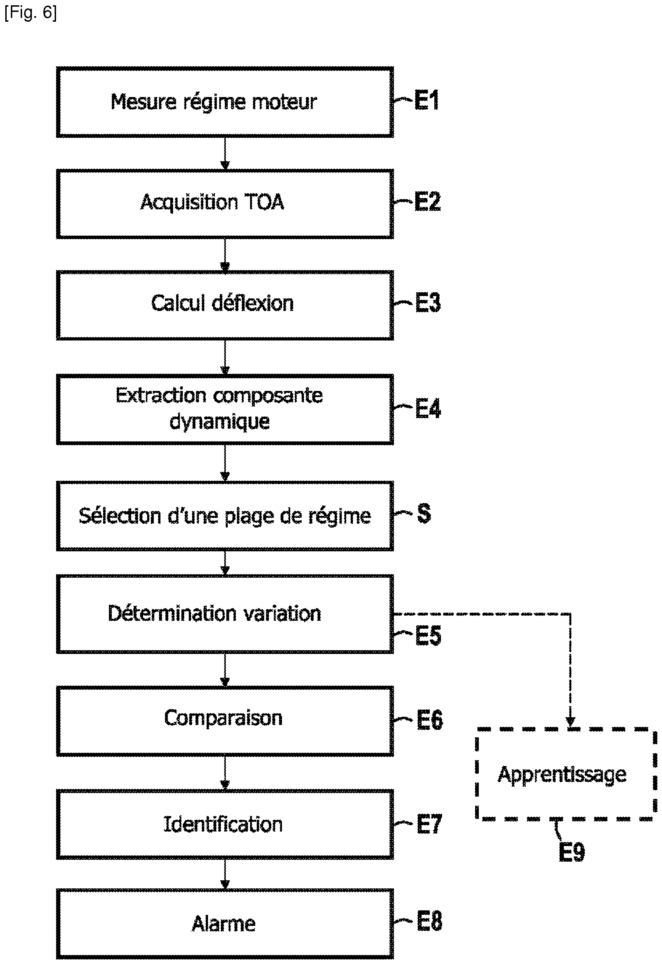

Comme illustré sur la Figure 6, ce procédé comprend une étape de mesure E1 du régime du moteur 10 réalisée par les moyens d'acquisition 7. Comme expliqué ci-dessus, la mesure du régime du moteur 10 peut être réalisée par un capteur tip-timing 71.

Parallèlement, le capteur tip-timing 71 ou 72 d'une roue à aubes 11 ou 12 effectue des mesures relatives aux temps/instants de passage du sommet de chaque aube mobile au droit du capteur. Les moyens de traitement 11 effectuent alors un conditionnement des mesures issues du capteur tip-timing 71 ou 72. Ce conditionnement consiste à identifier en temps réel chaque aube dans le signal temporel mesuré à l'aide d'une référence angulaire, extraire du signal temporaire le temps de passage (TOA) relatif à une aube identifiée, associer à l'aube identifiée son temps de passage extrait ainsi qu'une information relative à son numéro de tour (étape E2).

Pour chaque acquisition d'un temps de passage (TOA) d'une aube, l'unité de traitement principale 711e calcule, via le module de calcul 713, une déflexion au sommet de cette aube (étape E3), c'est-à-dire l'écart spatial du sommet de l'aube 111 par rapport à une position théorique de celle-ci au repos.

Ensuite, au cours d'une étape E4, l'unité de traitement principale 711e extraie, via un module d'extraction 712 illustré sur la figure 3, la composante dynamique pour chaque déflexion calculée, c'est-à-dire l'isolent de la composante statique. L'extraction de la composante dynamique est réalisée à l'aide de méthodes d'isolation connues de l'état de l'art (ex : moyenne, ou utilisation d'un filtre passe haut pour extraire une composante haute fréquence).

L'unité de traitement principale 711e réalise en outre, via un module de sélection 714, une étape de sélection S d'une ou plusieurs plages de régime du moteur 10 pour lesquelles l'ensemble des aubes de la roue aubagée 11 sont supposées synchrones, c'est-à-dire supposées présenter un même comportement vibratoire pour une même plage de régime du moteur 10. Les plages de régime du moteur 10 sont ici pré-identifiées par rapport à une base de données de référence, par exemple la base de données D1, comme garantissant que l'ensemble des aubes présentent un même comportement vibratoire lorsqu'elles passent au droit du capteur tip-timing 71 ou 72.

En vue d'identifier un éventuel endommagement d'une ou plusieurs aubes pour chaque plage de régime du moteur 10 sélectionnée au cours de l'étape de sélection S, les moyens de traitement 11 comprennent en outre un module de traitement 715 prenant pour entrées les composantes dynamiques sélectionnées par le module de sélection 714.

Le module de traitement 715 est configuré pour déterminer (étape E5) une éventuelle variation du comportement dynamique de chaque aube, en déterminant une variation des composantes dynamiques de chaque aube, et en mettant ces variations en relation avec une base de données référentielle. Les résultats de l'étape de détermination E5 sont de plus ajoutés à la base de données de suivi, ici la base de données D2. Ainsi, l'étape de détermination E5 peut être vue comme une étape d'analyse du comportement dynamique vibratoire de chaque aube pour chaque plage de régime du moteur sélectionnée au cours de l'étape de sélection S.

L'unité de traitement principale 711e procède ensuite, via un comparateur 716, à une étape de comparaison E6 suite à l'étape de détermination E5. L'étape de comparaison E6 consiste à comparer chaque variation détectée d'une composante dynamique de la déflexion d'une aube 111, c'est-à-dire chaque variation de son comportement dynamique, avec un ou plusieurs seuils préenregistrés dans la base de données D1 référentielle.

Au cours de cette étape E6, chaque variation de composante dynamique, donc de comportement dynamique, détectée pour une aube 111 est notamment comparée à un premier seuil de variation, qui correspond indirectement à un état de santé de l'aube. Ce premier seuil est lié à un deuxième seuil qui concerne la variation de la fréquence propre de l'aube 111, l'atteinte de ce seuil correspondant à un endommagement de l'aube 111.

Les premier et deuxième seuils ont été déterminés puis enregistrés dans la base de données D1 référentielle au cours d'une phase d'apprentissage E9 initiale.

La détection d'une variation de la composante dynamique de la déflexion de l'aube 111, c'est à dire la variation de son comportement dynamique, est donc ici liée à la détection indirecte d'une dérive de la fréquence propre de cette aube 111, cette dérive au-delà d'un seuil prédéterminé traduisant un endommagement de celle-ci.

Ainsi, si la variation de la composante dynamique de la déflexion/du comportement dynamique de l'aube 111 est supérieure au premier seuil de variation, cela signifie que la fréquence propre de l'aube 111 présente elle-même une dérive traduisant un endommagement de l'aube 111. En effet, un endommagement de l'aube 111 conduit à une dérive de sa fréquence propre et donc à une dérive de la composante dynamique de sa déflexion.

Par conséquent, lorsque le comparateur 716 détecte que la variation de la composante dynamique de la déflexion/du comportement dynamique de l'aube 111 est supérieure ou égale au premier seuil, l'aube 111 est identifiée (étape E7) comme endommagée.

Une alarme indiquant l'endommagement de l'aube 111 est alors émise (étape E8) à destination des moyens d'alertes 9 (via par exemple, des moyens sonores et/ou de visualisation). De même, des messages à envoyer ou à tenir à disposition de la maintenance peuvent être déclenchés au cours de l'émission de l'alarme.

## Revendications

1. Ensemble (1) modulaire et autonome de détection de la position angulaire des aubes d'une turbomachine (10), l'ensemble (1) modulaire étant configuré pour être monté de manière amovible sur une turbomachine (10) comprenant une première roue à aubes (11) dotée d'un premier nombre d'aubes (111 à 115) et une seconde roue à aubes (12) dotée d'un second nombre d'aubes (121 à 127), les deux roues à aubes (11, 12) étant traversées chacune par un flux d'air et couplées directement ou indirectement l'une à l'autre, et le premier nombre d'aubes de la première roue (11) et le second nombre d'aubes de la seconde roue (12) étant distincts et premiers entre eux,

   l'ensemble (1) comprend :

   - au moins une source d'alimentation électrique (711b, 71b, 72b) permettant le fonctionnement des éléments de l'ensemble de détection (1) indépendamment de la turbomachine (10) sur laquelle il est destiné à être embarqué,
   - au moins un premier capteur (71) configuré pour être associé à la première roue à aubes (11) de la turbomachine (10),
   - au moins un second capteur (72) configuré pour être associé à la seconde roue à aubes (12) de la turbomachine (10),
   - et un boîtier principal (711) comportant une unité de traitement principale (711e) et des moyens de mémorisation (711c),

   lesdits capteurs (71, 72) étant chacun configurés pour générer un signal ($S_1$, $S_2$) à chaque passage d'une aube d'une roue à aubes devant le capteur, et l'unité de traitement principale (711e) étant configurée pour déterminer l'intervalle de temps séparant la détection d'une aube (111 à 115) de la première roue (11) avec la détection de chacune des aubes (121 à 127) de la seconde roue (12).

**2.** Ensemble (1) modulaire et autonome de détection selon la revendication 1, dans lequel le boîtier principal (711), ledit au moins un premier capteur (71) et ledit au moins un second capteur (72) comprennent chacun des moyens (711d, 71d, 72d) de fixation manuelle réversible permettant de les monter sur la turbomachine (10) de manière amovible.

**3.** Ensemble (1) modulaire et autonome de détection selon l'une des revendications 1 ou 2, dans lequel chaque premier et second capteurs (71, 72) comprend un module de détection (71a, 72a), un module de traitement local (71e, 72e), et des moyens de communications (71c, 72c) configurés pour délivrer les mesures du capteur correspondant (71, 72) à l'unité de traitement (711e).

**4.** Ensemble (1) modulaire et autonome de détection selon la revendication 3, dans lequel chaque premier et second capteurs comprennent en outre une source d'alimentation (71b) du capteur, et les moyens de communications sont des moyens de communications sans fil.

**5.** Ensemble (1) modulaire et autonome de détection selon l'une des revendications 1 à 4, dans lequel le boîtier principal (711) comprend en outre un module d'horloge sur lequel sont synchronisés lesdits au moins un premier et au moins un second capteur (71, 72).

**6.** Ensemble (20) de détection d'endommagement d'une aube d'une roue à aubes d'une turbomachine, comprenant un ensemble (1) modulaire et autonome de détection de la position angulaire des aubes d'une roue à aubes selon l'une des revendications 1 à 5, et des moyens d'alerte (9).

**7.** Turbomachine (10) comprenant un ensemble (1) autonome et modulaire de détection de la position angulaire des aubes d'une roue à aubes selon l'une des revendications 1 à 6 ou un ensemble (20) de détection d'endommagement d'une aube d'une roue à aubes d'une turbomachine selon la revendication 6, la turbomachine (10) comprenant, pour chaque élément de l'ensemble (1) parmi le boîtier principal (711), ledit au moins premier capteur (71) et ledit au moins un second capteur (72), un logement (70) et une trappe d'accès audit logement (70).

**8.** Turbomachine (10) selon la revendication 7, comprenant une première roues à aubes (11) comprenant un premier nombre d'aubes (111 à 115) et une seconde roue à aubes (12) comprenant un second nombre d'aubes (121 à 127), les deux roues à aubes (11, 12) étant traversées chacune par un flux d'air et couplées directement ou indirectement l'une à l'autre, et le premier nombre d'aubes de la première roue (11) et le second nombre d'aubes de la seconde roue (12) étant distincts et premiers entre eux.

**9.** Turbomachine (10) selon la revendication 8, dans laquelle lesdits au moins un premier et au moins un second capteurs (71, 72) possèdent une bande passante fréquentielle correspondant aux régimes de rotation de l'arbre pour lesquels les aubes sont détectées.

**10.** Aéronef comprenant au moins une turbomachine (10) selon l'une des revendications 7 à 9.

**Patentansprüche**

**1.** Modulare und autonome Anordnung (1) zur Erfassung der Winkelposition von Schaufeln einer Turbomaschine (1), wobei die modulare Anordnung (1) dazu ausgestaltet ist, abnehmbar an einer Turbomaschine (10) montiert zu sein, die ein erstes Schaufelrad (11), das mit einer ersten Anzahl von Schaufeln (111 bis 115) ausgestattet ist, und ein zweites Schaufelrad (12) umfasst, das mit einer zweiten Anzahl von Schaufeln (121 bis 127) ausgestattet ist, wobei die zwei Schaufelräder (11, 12) jeweils von einem Luftstrom durchquert werden und direkt oder indirekt aneinander gekoppelt sind, und die erste Anzahl von Schaufeln des ersten Rades (11) und die zweite Anzahl von Schaufeln des zweiten Rades (12) verschieden und zueinander prim sind,

und die Anordnung (1) umfasst:

- mindestens eine elektrische Versorgungsquelle (711b, 71b, 72b), die den Betrieb von Elementen der Erfassungsanordnung (1) unabhängig von der Turbomaschine (10) erlaubt, auf welcher sie mitgeführt werden soll,
- mindestens einen ersten Sensor (71), der dazu ausgestaltet ist, mit dem ersten Schaufelrad (11) der Turbomaschine (10) assoziiert zu sein,

- mindestens einen zweiten Sensor (72), der dazu ausgestaltet ist, mit dem zweiten Schaufelrad (12) der Turbomaschine (10) assoziiert zu sein,
- und ein Hauptgehäuse (711), das eine Hauptverarbeitungseinheit (711e) und Speichermittel (711c) beinhaltet,

wobei die Sensoren (71, 72) jeweils dazu ausgestaltet sind, ein Signal ($S_1$, $S_2$) an jedem Durchgang einer Schaufel eines Schaufelrades vor dem Sensor zu erzeugen, und die Hauptverarbeitungseinheit (711e) dazu ausgestaltet ist, das Zeitintervall zu bestimmen, das die Erfassung einer Schaufel (111 bis 115) des ersten Rades (11) von der Erfassung jeder der Schaufeln (121 bis 127) des zweiten Rades (12) trennt.

2. Modulare und autonome Erfassungsanordnung (1) nach Anspruch 1, wobei das Hauptgehäuse (711), der mindestens eine erste Sensor (71) und der mindestens eine zweite Sensor (72) jeweils Mittel (711d, 71d, 72d) zur reversiblen manuellen Befestigung umfassen, die zulassen, dass sie an der Turbomaschine (10) abnehmbar montiert werden.

3. Modulare und autonome Erfassungsanordnung (1) nach einem der Ansprüche 1 oder 2, wobei jeder erste und zweite Sensor (71, 72) ein Erfassungsmodul (71a, 72a), ein lokales Verarbeitungsmodul (71e, 72e) und Kommunikationsmittel (71c, 72c) umfasst, die dazu ausgestaltet sind, die Messungen des entsprechenden Sensors (71, 72) an die Verarbeitungseinheit (711e) zu liefern.

4. Modulare und autonome Erfassungsanordnung (1) nach Anspruch 3, wobei jeder erste und zweite Sensor ferner eine Versorgungsquelle (71b) des Sensors umfassen und die Kommunikationsmittel drahtlose Kommunikationsmittel sind.

5. Modulare und autonome Erfassungsanordnung (1) nach einem der Ansprüche 1 bis 4, wobei das Hauptgehäuse (711) ferner ein Taktgebermodul umfasst, auf welchem der mindestens eine erste und mindestens eine zweite Sensor (71, 72) synchronisiert sind.

6. Anordnung (20) zur Erfassung von Schäden einer Schaufel eines Schaufelrades einer Turbomaschine, umfassend eine modulare und autonome Anordnung (1) zur Erfassung der Winkelposition von Schaufeln eines Schaufelrades nach einem der Ansprüche 1 bis 5, und Warnungsmittel (9).

7. Turbomaschine (10), umfassend eine autonome und modulare Anordnung (1) zur Erfassung der Winkelposition von Schaufeln eines Schaufelrades nach einem der Ansprüche 1 bis 6 oder eine Anordnung (20) zur Erfassung von Schäden einer Schaufel eines Schaufelrades einer Turbomaschine nach Anspruch 6, wobei die Turbomaschine (10) für jedes Element der Anordnung (1) von dem Hauptgehäuse (711), dem mindestens ersten Sensor (71) und dem mindestens zweiten Sensor (72) eine Aufnahme (70) und eine Zugangsklappe zu der Aufnahme (70) umfasst.

8. Turbomaschine (10) nach Anspruch 7, umfassend ein erstes Schaufelrad (11), das eine erste Anzahl von Schaufeln (111 bis 115) umfasst, und ein zweites Schaufelrad (12), das eine zweite Anzahl von Schaufeln (121 bis 127) umfasst, wobei die zwei Schaufelräder (11, 12) jeweils von einem Luftstrom durchquert werden und direkt oder indirekt aneinander gekoppelt sind, und die erste Anzahl von Schaufeln des ersten Rades (11) und die zweite Anzahl von Schaufeln des zweiten Rades (12) verschieden und zueinander prim sind.

9. Turbomaschine (10) nach Anspruch 8, wobei der mindestens eine erste und mindestens eine zweite Sensor (71, 72) eine Frequenzbandbreite besitzen, die den Drehzahlen der Welle entspricht, für welche die Schaufeln erfasst werden.

10. Luftfahrzeug, umfassend mindestens eine Turbomaschine (10) nach einem der Ansprüche 7 bis 9.

**Claims**

1. A modular and autonomous assembly (1) for detecting the angular position of the blades of a turbine engine (10), the modular assembly (1) being configured to be mounted in a reversible way on a turbine engine including a first impeller (11) comprising a first number of blades (111 to 115) and a second impeller (12) comprising a second number of blades (121 to 127), each of the two impellers (11, 12) having an air flow passing through it and being coupled directly or indirectly to one another, and the first number of blades of the first impeller (11) and the second number of blades of the second impeller (12) being distinct and mutually prime,

the assembly (1) comprising:

- at least one electrical power source (711b, 71b, 72b) allowing the operation of the elements of the detection assembly (1) independently of the turbine engine (10) on which it is intended to be carried,
- at least one first sensor (71) configured to be associated with the first impeller (11),
- at least one second sensor (72) configured to be associated with the second impeller (12),
- and a main housing (711) including a main processing unit (711e) and storage means (711c),

each of said sensors (71, 72) being configured to generate a signal ($S_1$, $S_2$) at each passage of a blade of an impeller in front of the sensor, and the main processing unit (711e) being configured to determine the time interval separating the detection of a blade (111 to 115) of the first impeller (11) with the detection of each of the blades (121 to 127) of the second impeller (12).

2. The modular and autonomous detection assembly (1) according to claim 1, wherein the main housing (711), said at least one first sensor (71) and said at least one second sensor (72) each comprises reversible manual attachment means (711d, 71d, 72d) allowing them to be removably mounted on the turbine engine (10).

3. The modular and autonomous detection assembly (1) according to one of claims 1 or 2, wherein each first and second sensor (71, 72) comprises a detection module (71a, 72a), a local processing module (71e, 72e), and communication means (71c, 72c) configured to deliver the measurements of the corresponding sensor (71, 72) to the processing unit (711e).

4. The modular and autonomous detection assembly (1) according to claim 3, wherein each first and second sensor also comprises a power source (71b) for the sensor, and the communication means are wireless communication means.

5. The modular and autonomous detection assembly (1) according to one of claims 1 to 4, wherein the main housing also comprises a clock module on which are synchronized said at least one first and at least one second sensors (71, 72)

6. An assembly (20) for detecting damage to a blade of an impeller of a turbine engine, comprising a modular and autonomous (1) assembly for detecting the angular position of the blades of an impeller according to one of claims 1 to 5, and alarm means (9).

7. A turbine engine (10) comprising an autonomous and modular assembly (1) for detecting the angular position of the blades of an impeller according to one of claims 1 to 6 or an assembly (20) for detecting damage to a blade of an impeller of a turbine engine according to claim 7, the turbine engine (10) comprising, for each element of the assembly (1) among the main housing (711), said at least one first sensor (71) and said at least one second sensor (72), a recess (70) and a hatch for access to said recess (70).

8. The turbine engine (10) according to claim 7, comprising a first impeller (11) comprising a first number of blades (111 to 115) and a second impeller (12) comprising a second number of blades (121 to 127), each of the two impellers (11, 12) having an air flow passing through it and being coupled directly or indirectly to one another, and the first number of blades of the first impeller (11) and the second number of blades of the second impeller (12) being distinct and mutually prime.

9. The modular and autonomous detection assembly (1) according to claim 8, wherein said at least one first and at least one second sensor (71, 72) has a frequency bandwidth corresponding to the rotation speeds of the shaft for which the blades are detected.

10. An aircraft comprising at least one turbine engine (10) according to one of claims 7 to 9.

[Fig. 1]

[Fig. 2]

[Fig. 3]

[Fig. 4]

[Fig. 5]

**200**

Détection des aubes de la première roue

**210**

Détection des aubes de la seconde roue

Calcul des intervalles de temps —220

Détermination de la position angulaire —230

Désignation d'une référence angulaire —240

[Fig. 6]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2012148400 A
- EP 2661611 A
- US 8528317 B
- US 2018224353 A